Europäisches Patentamt

European Patent Office

Office européen des brevets

(11) Publication number: **0 505 165 A2**

# (12) EUROPEAN PATENT APPLICATION

(21) Application number : 92302333.7

(22) Date of filing : 18.03.92

(51) Int. Cl.⁵ : **G06F 15/40, G06F 9/44**

(30) Priority : **19.03.91 JP 78166/91**

(43) Date of publication of application :
**23.09.92 Bulletin 92/39**

(84) Designated Contracting States :
**DE FR GB**

(71) Applicant : **HITACHI, LTD.**
**6, Kanda Surugadai 4-chome**
**Chiyoda-ku, Tokyo 100 (JP)**

(72) Inventor : **Mori, Toshiaki**
**6-12, Saidaiji, Akodacho-2-chome**
**Nara-shi (JP)**
Inventor : **Yoshikawa, Makiko**
**442-1, Shimokodanaka**
**Nakahara-ku, Kawasaki-shi (JP)**
Inventor : **Shuji, Toshinobu**
**34-184, Miyatani**
**Hironocho, Uji-shi (JP)**

(74) Representative : **Calderbank, Thomas Roger et al**
**MEWBURN ELLIS 2 Cursitor Street**
**London EC4A 1BQ (GB)**

(54) **Data base constructing method and system.**

(57)   Item information of a data base taken out from a dictionary (110) is modified or selected in accordance with technical information while displaying the item information and is stored as read item information. Check information is prepared and stored and a data base frame is prepared on the basis of the read item information. Entry, modification and retrieval of the data base are performed while examination is made by using the data base frame and the check information, so that a user such as a research worker who has not sufficient knowledge relative to a computer can construct the data base for the own technical field easily.

FIG. I

The present invention relates to an input method for use in preparation, entry, modification and retrieval of a data base in an information processing system, and more particularly to a data base constructing method capable of constructing a user's own data base easily even if the user has not knowledge relative to commands and programming which resides in a level substantially similar to a level of his knowledge in his technical field or knowledge of a data base managing person.

In a conventional data base constructing method, generally, the data base managing person inquires of the user data items required by the user in detail and collects the inquired results for arrangement to decide a format for data base items and prepare a data base by means of the managing person's technical commands. Further, it is common that entry, modification and retrieval of data in the data base are made by preparing an exclusive work processing application program for the data base by a programmer while obtaining user's knowledge relative to data and information or by utilizing general-purpose programs for entry, modification and retrieval of data.

Prior art techniques of this type have been found in, for example, Japanese Patent Unexamined Publication Nos. 63-217437 and 63-269224.

In the above-mentioned prior art techniques, the user of data base such as, for example, a chemist or a research worker associated with molecule selects data items over many branches such as research objects, research fields and research materials if necessary and constructs his own data base for research, so that entry, update and retrieval of data are made for the data base. To this end, however, knowledge concerning the computer is required. More particularly, when the data base is constructed, knowledge of commands for preparation of data base frame and setting of data base items residing in a level substantially similar to a level of the data base managing person's knowledge and knowledge of programming for performing entry, modification, deletion and the like of data in the data base are required. In other words, a general-purpose program for entry, modification and retrieval can examine only common items such as the number of digits, kind of characters, requisite input and the like, and if accuracy of data is to be made higher, an exclusive program is necessary and hence knowledge of data information and knowledge of program are required. Accordingly, it is very difficult that the user of the data base such as a chemist or a research worker who has not knowledge concerning the computer sufficiently has his own exclusive data base.

On the other hand, the data base managing person is required to have knowledge relative to attribute of data items to be stored in the data base, the number of digits and check information (error check information) and when the person's technical field is the data base, it is very difficult for the person to have such knowledge. Such technical information is varied momently and the number of data items continue to be increased more and more. Thus, it is troublesome that the data base managing person inquires of a chemist or a research worker one by one whenever the technical information is varied or the number of data items is increased and modifies the data base frame, item information and check information on the basis of the inquired result.

It is an object of the present invention to solve the above problems in the prior art by providing a data base constructing method and system in which a data base user such as a research worker having no sufficient knowledge relative to a computer such as commands and programming can construct his own data base easily.

In order to achieve the above object, according to the present invention, there is provided a data base constructing method comprising an item dictionary for storing item information of a data base as a dictionary, a first step of modifying or selecting the item information taken out from the item dictionary while reflecting user's knowledge and storing the modified or selected item information in a memory, a second step of preparing and storing check information necessary for programming on the basis of the item information read from the memory and preparing a data base frame, and a third step of performing process in accordance with the prepared check information and data frame, and there is provided a system realized by the method.

More particularly, the first step includes a step of displaying the information taken out from the item dictionary in a display unit of a terminal device and modifying or selecting the display information and a step of storing the modified or selected item information in the memory. The third step of performing this process includes a processing step of performing entry, update and retrieval of data of the data base and a step of reading the check information stored in the second step in the processing step and manipulating data to be processed while examining the data in accordance with the read check information.

In a preferred configuration, when the item information stored in the memory of the data base item information is modified, added or deleted, the modification, addition or deletion is reflected to the item dictionary.

Further, in the display unit for displaying data, when the entry, update or display of data is made, records in the data base are treated as one logical record in one display screen. When a retrieved result is displayed, a plurality of records of the data base can be treated to be displayed in one display screen.

According to the first step of the present invention, the item information knowledge of the user's technical field can be stored in the memory or the dictionary if necessary. According to the second step, the data base frame is prepared in accordance with the data base managing person's knowledge on the basis of the item information knowledge, and check information knowledge necessary for programming is prepared and stored. That is, basic operation necessary for the data base operation is stored in the memory. The prepared data base frame is to satisfy the data base user's demand. Further, the stored check process of the entry, modification and retrieval processing program for the data base also utilizes the user's technical knowledge efficiently. In addition, according to the third step, the entry, modification and retrieval of the data base are performed while data to be processed is examined in accordance with the data base frame and check information. Accordingly, the user's knowledge can be reflected while including the check process of the entry, modification and retrieval program.

In this manner, the user can construct the user's own data base of the user's technical field.

In the drawings:

Fig. 1 is a block diagram showing the whole configuration of a data base constructing system according to an embodiment of the present invention;

Fig. 2 schematically illustrates an example of information stored in an item dictionary memory;

Fig. 3 schematically illustrates an example of a data base frame and entry data;

Fig. 4 schematically illustrates an example of a display screen format in an entry process;

Fig. 5 is a flow chart showing a procedure of means (1);

Fig. 6 is a flow chart showing a procedure of means (2);

Fig. 7 is a flow chart showing a procedure of means (3);

Fig. 8 is a flow chart showing a procedure of means (4); and

Fig. 9 is a flow chart showing a procedure of means (5).

An embodiment of the present invention is now described in detail with reference to the accompanying drawings.

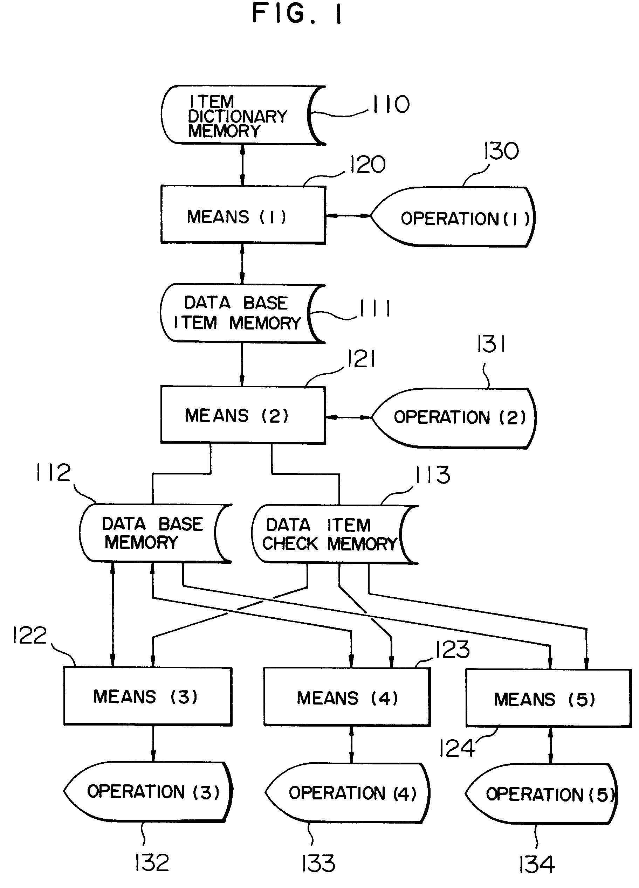

Fig. 1 is a block diagram showing the whole configuration of a data base constructing system according to an embodiment of the present invention.

In Fig. 1, numeral 110 denotes an item dictionary memory, 111 a data base item memory, 112 a data base memory, 113 a data item check memory, 120 to 124 means (1) to (5), respectively, and 130 to 134 operations (1) to (5), respectively. A group of item information capable of being used in a data base is stored in the item dictionary memory 110 singly or plurally. The item information group is inputted from the item dictionary memory 110 by means of the means (1) 120 to be displayed in a terminal unit of the operation unit (1) 130. Item information is selected from the displayed item information group by means of the operation 130 of a terminal operator and the item information selected by the means (1) 120 is supplied to the data base item memory 111. When information other than the displayed item information is desired to be selected additionally, additional indication information and item information are inputted to the operation unit (1) 130 and are supplied to the data base item memory 111 by means of the means (1) 120. At this time, when addition of information is indicated, the indication information for the addition is supplied to the item dictionary memory 110 as well as the data base item memory 111 at the same time through the means (1) 120.

The data base item information stored in the data base item memory 111 is read out by the means (2) 121 and is displayed in a terminal unit of the operation unit (2) 131. Check information for each item and check information among items displayed in the operation unit (2) 131 are inputted to the operation unit (2) 131 by means of terminal operation of the operation unit (2) 131 and are supplied to the data item check memory 113 through the means (2) 121. The means (2) 121 issues a command for securing a frame of the data base memory 112 by means of the means (2) 121 and issues a command for defining data base items into the data base memory frame.

The means (3) 122 performs a process for registering data to the data base memory 112. The means (3) 122 reads out an item name, the digit number of item, data attribute, unit and check information from the data item check memory 113 and displays an entry data input screen of the operation unit (3) 132. By inputting data to the operation unit (3) 132 by the terminal operator, items displayed by the operation unit (3) 132 are checked or examined one by one by using check information read from the data item check memory 113. Relation among the items is also examined, so that correct data is supplied to the data base memory 112 through the means (3) 122 to register the data.

The means (4) 123 performs a process for updating data stored in the data base memory. The means (4) 123 reads out an item name, the digit number of item, data attribute, unit and check information from the data item check memory 113 and displays an update record retrieving condition input screen of the operation unit (4) 133. An update record is retrieved from the data base memory 112 in response to update record retrieving condition input to the operation unit (4) 133.

The record retrieved from the data base memory 112 and which is not updated is displayed in the operation unit (4) 133. The information displayed in the operation unit (4) 133 and which is not updated is modified through the means (4) 123 by the terminal operator. The updated information is examined for each item by using check information read from the data base memory 112 and relation among the items is also examined by using the check information, so that correct data is supplied to the data base memory 112 through the means (4) 123.

The means (5) 124 performs a process for retrieving data from the data base memory 112. The means (5) 124 reads out an item name, the digit number of item, data attribute, unit and check information from the data item check memory 113 and displays a retrieval condition input screen of the operation unit (5) 134. In response to an retrieval condition input to the operation unit (5) 134, records coincident with the condition are retrieved from the data base memory 112. The condition coincident records are displayed in the operation unit (5) 134 as a list. When a command is issued to display contents of the condition coincident records displayed as a list in the operation unit (5) 134, the contents of the records are displayed in the operation unit (5) 134.

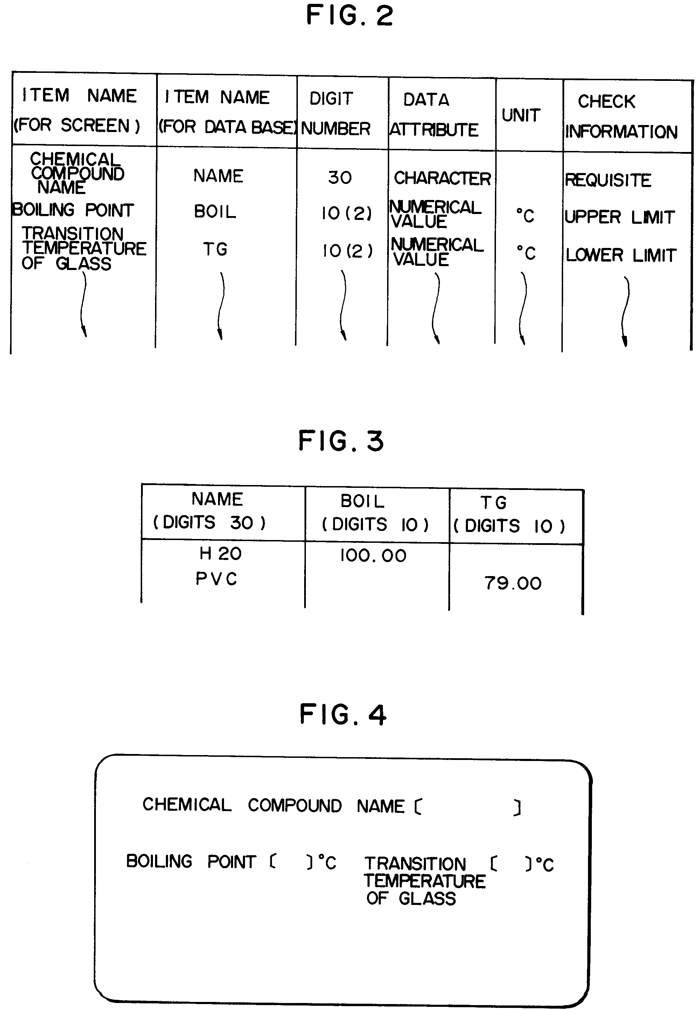

Fig. 2 shows an example of information of the item dictionary memory 110.

An item name (for display screen) is given to an item and is a headword, such as a name of chemical compound, the boiling point, the transition temperature of glass and the like, displayed in a terminal display screen. An item name (for data base) is given in the data base frame and is a name which is an identifier between the data base and processing programs as shown by NAME, BOIL, TG and the like. The digit number represents the number of digits occupied by the associated item in the data base frame in the display screen. In data attribute column, data attribute information of the associated item such as characters, numerical values and the like is stored. A unit is data unit information, such as °C, of the associated item and is an auxiliary headword of the terminal display screen. Check information of the associated item is stored in check information column. As the check information, information stored in the item dictionary memory and check information added by the means (1) 120 and (2) 121 are stored.

Fig. 3 shows a data base frame prepared on the basis of Fig. 2 and registered data. The data base frame is prepared with items of NAME, BOIL and TG having the digit numbers of 30, 10 and 10, respectively, and names of chemical compounds (H20, PVC) are registered in the data base frame by means of data entry.

Fig. 4 shows a display screen of data read out from the data item check memory and displayed by the means (3) 122 and (4) 123. The item names (for display screen), data input portions represented by [ ] and having space corresponding to the digit number, and unit are displayed in the display screen as a group. When there are a plurality of input items, the group is arranged to be accommodated within the display screen.

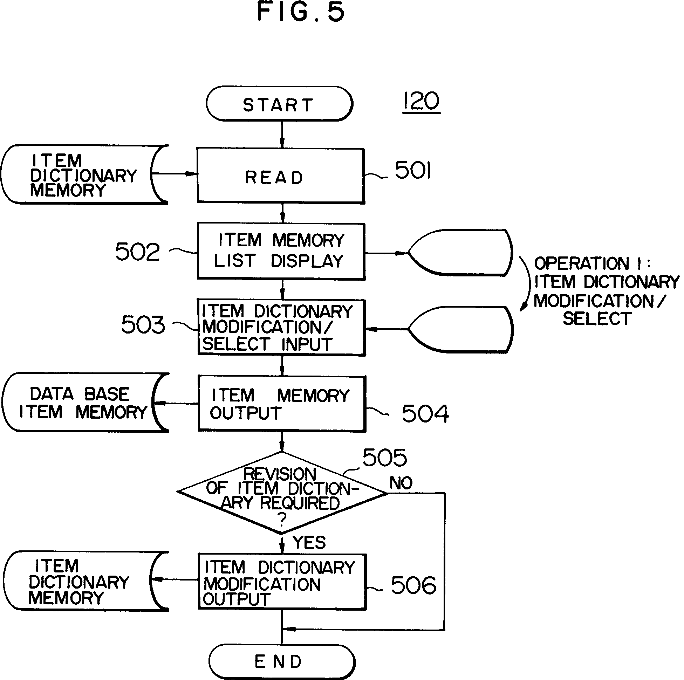

Fig. 5 is a flow chart showing a procedure of the means (1) 120.

Item dictionary group is read from the item dictionary memory in response to start of execution by the means (1) 120 (501).

The item dictionary group read in step 501 is displayed in the terminal unit. When the item dictionary group is not displayed in one display screen, the display screen is moved vertically (502).

Item information selected by the terminal operator from the item dictionary group displayed in step 502 and modification information are inputted (503).

The item information modified, added or selected in step 503 is supplied to the data item memory (504).

It is confirmed whether indication reflected to the item dictionary is present in the items modified or added in step 503 (505).

When the indication is not present, operation of the means (1) 120 is finished.

In step 505, when the reflected indication is present, the modified or added item is supplied to the item dictionary memory (506).

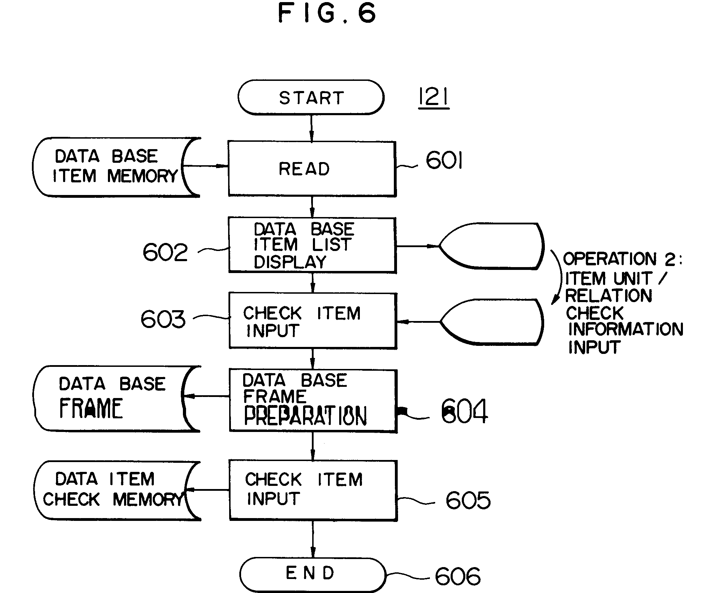

Fig. 6 is a flow chart showing a procedure of the means (2) 121.

Contents of the data base item memory supplied by the means (1) 120 are read in response to start of execution of the means (2) 121 (601).

The contents of the item memory read in step 601 are displayed in the terminal unit. When the contents are not displayed in one display screen, the display screen is moved vertically (602).

Check information and item order change information inputted by the terminal operator is inputted to the item memory displayed in step 602 (603).

The data base frame is prepared and issued on the basis of the item order change information inputted in step 603. When preparation of the data base frame is completed, a data base item definition command is prepared and issued (604).

The item information group inputted in step 603 is supplied to the data item check memory (605).

Operation of the means (2) 121 is finished (606).

Operations of the means (1) 120 and (2) 121 may be made successively.

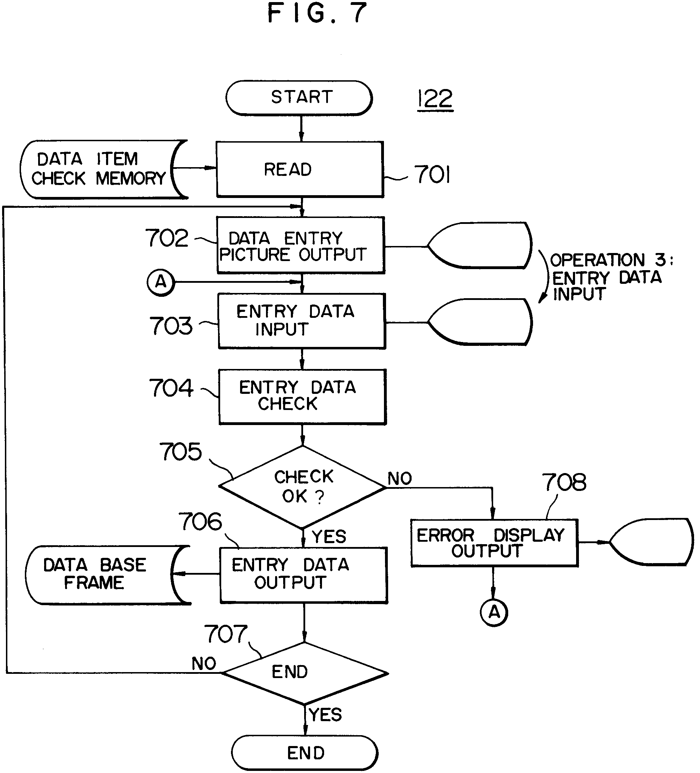

Fig. 7 is a flow chart showing a procedure of the means (3) 122.

Contents of the data item check memory is read in response to start of execution of the means (3) 122 (701).

The data item name (for display screen), the digit number and the unit read in step 701 are displayed in the data entry screen (702).

Entry data inputted by the operator is inputted in the display screen displayed in step 702 (703).

The entry data inputted in step 703 is examined by using the check information read in step 701 (704).

The result of the examination in step 704 is confirmed. When it is not normal, the process proceeds to step 708 (705).

When the result of examination in step 705 is normal, the entry data is set in the data base frame (706).

It is confirmed whether an end indication from the terminal operator is present. When it is present, operation of the means (3) 122 is finished (707).

When the end indication is not present, the process is returned to step 702 to execute operations starting from step 702.

When the result of the examination in step 705 is not normal, an error indication is produced to be supplied in the terminal unit and operation starting from step 703 is executed (708).

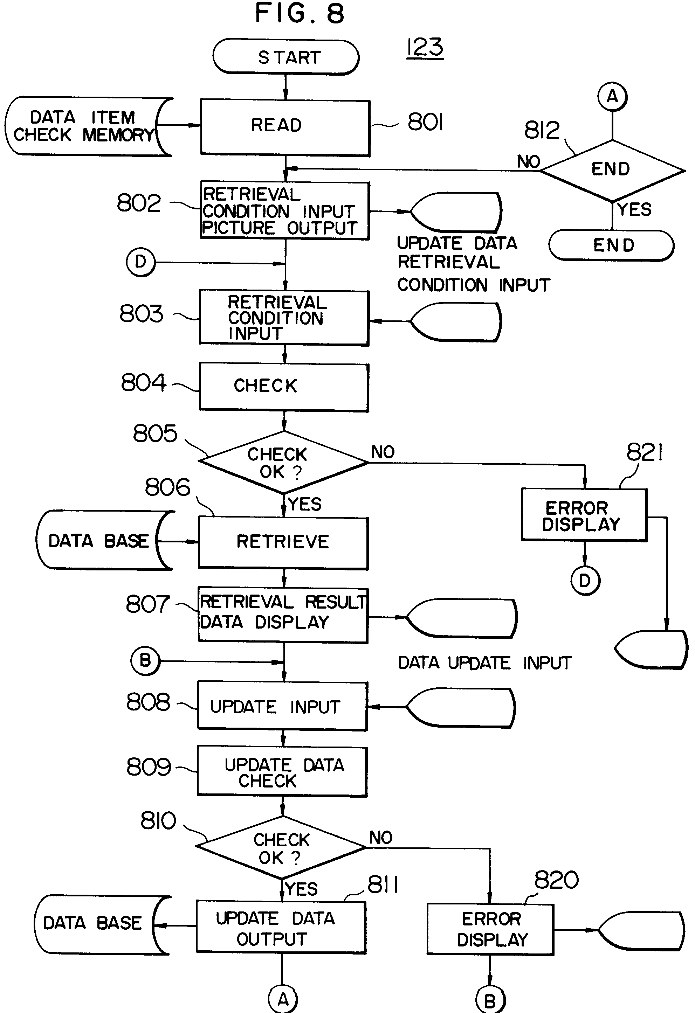

Fig. 8 is a flow chart showing a procedure of the means (4) 123.

Contents of the data item check memory are read in response to start of execution of the means (4) 123 (801).

The data item name (for display screen), the digit number and the unit read in step 801 are displayed in the retrieval condition input screen. When a plurality of conditions are used for retrieval, an additional input column is given (802).

Retrieval condition inputted by the operator is read into the screen displayed in step 802 (803).

The retrieval condition read in step 803 is confirmed by using the check information read in step 801. When the input information in step 803 is coincident with the retrieval condition equation, it is assumed that the input information is normal (804).

The result of the confirmation in step 804 is confirmed. When it is not normal, the process proceeds to step 821 (805).

When the result of the confirmation is normal in step 805, the data base is retrieved with the retrieval condition of step 803 (806).

Data base record information retrieved in step 806 and coincident with the retrieval condition is displayed in the terminal unit (807).

Update information of the terminal operator in respect to the entry data displayed in step 807 is read (808).

The update information read in step 808 is confirmed by using the check information read in step 801 (809).

The result of the confirmation in step 809 is confirmed. When it is not normal, the process proceeds to step 820 (810).

When it is normal, the updated entry data is supplied to the data base (811).

It is confirmed whether an end indication from the terminal operator is present or not. When the end indication is present, operation of the means (4) 123 is finished. Otherwise, the process is returned to step 802 to execute operations starting from step 802 (812).

In step 810, when the result of the confirmation is not normal, an error indication is supplied to the terminal unit and the operations starting from step 808 are executed again (820).

In step 805, when the result of the confirmation is not normal, an error indication is supplied to the terminal unit and the operations starting from step 803 are executed again (821).

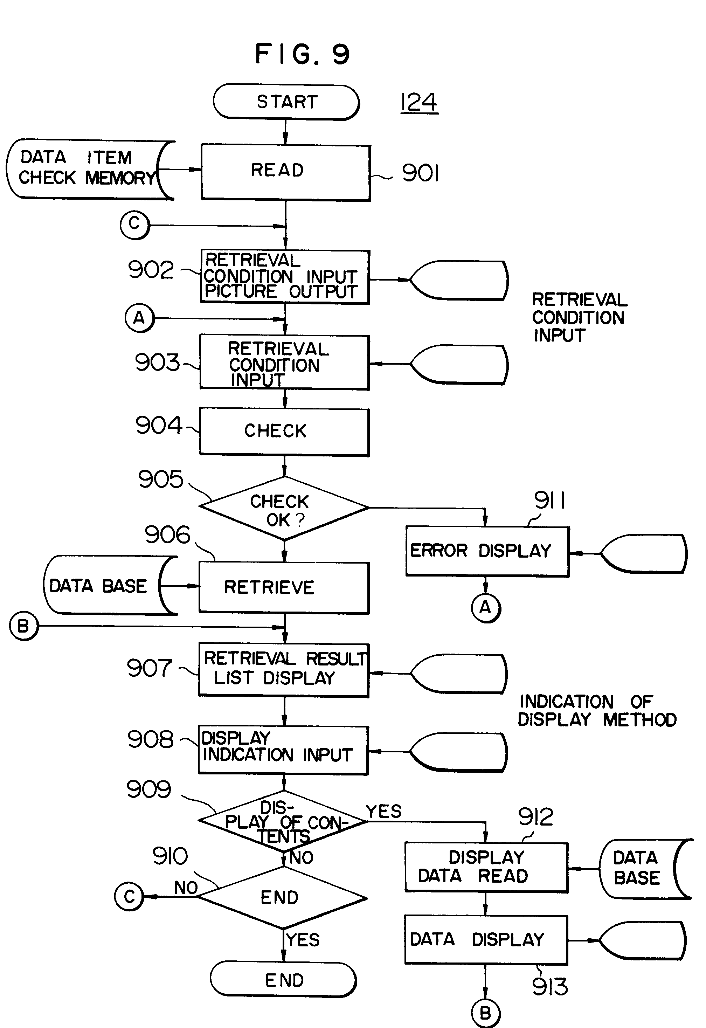

Fig. 9 is a flow chart showing a procedure of the means (5) 124.

Contents of the data item check memory are read in response to start of execution of the means (5) 124 (901).

The data item name (for display screen), the digit number and the unit read in step 901 are displayed in the retrieval condition input screen. When a plurality of conditions are used for retrieval, an additional input column is given (902).

Retrieval condition inputted by the operator is read into the screen displayed in step 902 (903).

The retrieval condition read in step 903 is confirmed by using the check information read in step 901. When the input information in step 903 is coincident with the retrieval condition equation, it is assumed that the input information is normal (904).

The result of the confirmation in step 904 is confirmed. When it is not normal, the process proceeds to step 911 (905).

When the result of the confirmation is normal in step 905, the data base is retrieved with the retrieval condition of step 903 (906).

Records retrieved in step 906 and coincident with the retrieval condition are displayed in a list (907).

After the list is displayed in step 907, display indication is read (908).

When the indication of step 908 represents display of contents, the process proceeds to step 912 (909).

When the indication of step 908 represents an end of operation, operation of the means (5) 124 is finished. Otherwise, the process is returned to step 902 to execute operations starting from the step 902 (910).

In step 905, when not normal, an error indication is supplied to the terminal unit and operations starting from step 903 is executed (911).

In step 909, when the indication represents display of contents, the indicated record is read from the data base (912).

The data read in step 912 is displayed in the terminal unit (913).

The data display result is confirmed by the operator and the process proceeds to step 901.

According to the embodiment, the data base item dictionary is always updated and accordingly is the newest. A series of processes such as the preparation of the data base and entry, update and retrieval of data can be attained, and if the user has operation knowledge of this system, the user can treat the user's personal data base without operation knowledge of the data base and an exclusive program thereof.

Further, in the data entry process, the update process or the display process, one registered record is displayed in one display screen and accordingly abnormality of data due to misjudgment or entry of abnormal data due to insufficient error check can be reduced.

As described above in detail, according to the present invention, the data base frame and check information necessary for programming can be prepared on the basis of the data base item information reflecting the user's technical knowledge. When the data base is constructed, entry, modification and retrieval of data is made in accordance with the check information and the data base frame, and accordingly the user can perform these processes easily without knowledge relative to the exclusive program and the data base.

## Claims

1. A data base constructing method comprising an item dictionary (110) for storing item information of a data base as a dictionary, a first step of modifying or selecting the item information taken out from said item dictionary (110) and storing the modified or selected item information in a memory (111), a second step of preparing and storing check information necessary for programming on the basis of the item information read from the memory (111) and preparing a data base frame, and a third step of performing process in accordance with the prepared check information and data frame.

2. A data base constructing method according to Claim 1, wherein said first step includes a step of displaying information taken out from said dictionary (110) to a display unit of a terminal unit and modifying or selecting the displayed information and a step of storing the modified or selected item information in the memory (111), and said third step includes a processing step of performing entry, update and retrieval of data of the data base and a step of reading the check information stored in said second step and manipulating data while examining data to be processed in accordance with the read check information in said processing step.

3. A data base constructing method according to Claim 1, comprising a step of reflecting modification, addition or deletion of the item information stored in said memory (111), when the item information stored in said memory (111) is modified, added or deleted.

4. A data base constructing method according to Claim 2, comprising a display unit for displaying data, and a step of displaying records in the data base as one logical record in one display screen when the entry, update or display of data is performed and displaying a plurality of data bases in one display screen when a result of retrieval is displayed.

5. A data base constructing system comprising an item dictionary (110) for storing item information of a data base as a dictionary, first means (120) for modifying or selecting the item information taken out from said item dictionary (110) and storing the modified or selected item information in a memory (111), second means (121) for preparing and storing check information necessary for programming on the basis of the item information read from the memory (111) and preparing a data base frame, and third means (122) for performing process in accordance with the prepared check information and data frame.

6. A data base constructing system according to Claim 5, wherein said first means (120) includes means for displaying information taken out from said dictionary (110) to a display unit of a terminal unit and modifying or selecting the displayed information and means for storing the modified or selected item information in the memory (111), and said third means (122) includes processing means for performing entry, update and retrieval of data of the data base and means for reading the check information stored in said second means (121) and manipulating data while examining data to be processed in accordance with the read check information in said processing means.

7. A data base constructing system according to Claim 5, comprising means for reflecting modification, addition and deletion of the item information stored in said memory (111) to said dictionary when the item information stored in said memory (111) is modified, added or deleted.

8. A data base constructing system according to Claim 6, comprising a display unit for displaying data and means for displaying records in the data base as one logical record in one display screen when the entry, update or display of data is performed and displaying a plurality of data bases in one display screen when a result of retrieval is displayed.

# FIG. 1

# FIG. 2

| ITEM NAME (FOR SCREEN) | ITEM NAME (FOR DATA BASE) | DIGIT NUMBER | DATA ATTRIBUTE | UNIT | CHECK INFORMATION |
|---|---|---|---|---|---|
| CHEMICAL COMPOUND NAME | NAME | 30 | CHARACTER | | REQUISITE |
| BOILING POINT | BOIL | 10 (2) | NUMERICAL VALUE | °C | UPPER LIMIT |
| TRANSITION TEMPERATURE OF GLASS | TG | 10 (2) | NUMERICAL VALUE | °C | LOWER LIMIT |

# FIG. 3

| NAME (DIGITS 30) | BOIL (DIGITS 10) | TG (DIGITS 10) |
|---|---|---|
| H 20 | 100.00 | |
| PVC | | 79.00 |

# FIG. 4

CHEMICAL COMPOUND NAME [          ]

BOILING POINT [    ]°C     TRANSITION [    ]°C
                          TEMPERATURE
                          OF GLASS

8

# FIG. 5

# FIG. 6

```
         ┌─────────────────┐
         │      START      │    121
         └────────┬────────┘
                  │
┌──────────────┐  ▼
│  DATA BASE   │ ┌──────────────┐
│ ITEM MEMORY  │→│     READ     │── 601
└──────────────┘ └──────┬───────┘
                        │
                        ▼
           ┌──────────────────┐
     602 ──│    DATA BASE      │──→ ⟨ ⟩    ┐ OPERATION 2:
           │    ITEM LIST      │           │ ITEM UNIT /
           │    DISPLAY        │           │ RELATION
           └────────┬─────────┘            │ CHECK
                    │                      │ INFORMATION
                    ▼                      │ INPUT
           ┌──────────────────┐           │
     603 ──│   CHECK ITEM      │←── ⟨ ⟩    ┘
           │   INPUT           │
           └────────┬─────────┘
                    │
┌──────────────┐    ▼
│  DATA BASE   │ ┌──────────────────┐
│   FRAME      │←│    DATA BASE      │
│              │ │    FRAME          │── 604
└──────────────┘ │    PREPARATION    │
                 └────────┬─────────┘
                          │
┌──────────────┐          ▼
│  DATA ITEM   │ ┌──────────────────┐
│ CHECK MEMORY │←│   CHECK ITEM      │── 605
└──────────────┘ │   INPUT           │
                 └────────┬─────────┘
                          │
                          ▼
                 ┌──────────────┐
                 │     END      │── 606
                 └──────────────┘
```

10

# F I G. 7

# FIG. 8

_123_

START

DATA ITEM
CHECK MEMORY → READ ~ 801

Ⓐ

812 — NO — END

RETRIEVAL
CONDITION INPUT
PICTURE OUTPUT ~ 802 →

YES

END

UPDATE DATA
RETRIEVAL
CONDITION INPUT

Ⓓ →

803 ~ RETRIEVAL
CONDITION
INPUT ←

804 ~ CHECK

805 — CHECK
OK ? — NO

821

ERROR
DISPLAY

806 ~

DATA BASE → RETRIEVE

YES

Ⓓ

807 ~ RETRIEVAL RESULT
DATA DISPLAY →

DATA UPDATE INPUT

Ⓑ →

808 ~ UPDATE INPUT ←

809 ~ UPDATE DATA
CHECK

810 — CHECK
OK ? — NO

YES 811

820

DATA BASE ← UPDATE DATA
OUTPUT

ERROR
DISPLAY

Ⓐ

Ⓑ

# FIG. 9